# EUROPÄISCHE PATENTSCHRIFT

(11) **EP 0 805 287 B1**
(45) Veröffentlichungstag und Bekanntmachung des Hinweises auf die Patenterteilung: **31.07.2002**
(21) Anmeldenummer: 97106043.9
(22) Anmeldetag: 12.04.1997
(51) Int. Cl.: F16D 33/16

(54) **Hydrodynamische Kupplung**
Hydrodynamic coupling
Accouplement hydrodynamique

(30) Priorität: 30.04.1996 DE 19617322
(43) Veröffentlichungstag der Anmeldung: 05.11.1997
(73) Patentinhaber: Voith Turbo GmbH & Co. KG, 89522 Heidenheim (DE)
(72) Erfinder: Von Berg, Wolfgang, 74564 Crailsheim (DE)
(74) Vertreter: Dr. Weitzel & Partner

(56) Entgegenhaltungen:
- DE-B- 1 011 230
- DE-B- 1 191 637
- DE-B- 1 194 207
- DE-C- 3 610 106
- US-A- 2 960 109

## Beschreibung

Die Erfindung betrifft eine hydrodynamische Kupplung mit einem Pumpenrad und einem Turbinenrad, die einen torusförmigen Arbeitsraum miteinander bilden.

Kupplungen dieser Art sind aus einer Vielzahl von Veröffentlichungen bekannt geworden. Nur beispielsweise wird verwiesen auf
(1) GB-A-922 415
(2) EP 062 274 A3
(3) Voith-Druckschrift Cr 112.

Die Erfindung geht aus von einer hydrodynamischen Kupplung gemäß Dokument (2). Dabei handelt es sich um sogenannte entleerbare Kupplungen mit Öldurchlauf. Aus Fig. 7 von Dokument (3) erkennt man eine Kupplung (dort in Tandem-Ausführung), wobei jeweils ein Pumpenrad mit einem Turbinenrad zusammenarbeitet. Am äußeren Umfang des Pumpenrades ist eine Zylinderschale befestigt, die ein Innengehäuse bildet. Die Pumpenräder und die Turbinenräder sind von einem Außengehäuse umgeben. Dem Arbeitsraum wird durch Bohrungen im Pumpenrad Öl zugeführt. Dieses Öl kann durch Abspritzdüsen im Innengehäuse austreten. Es wird vom Außengehäuse aufgefangen und gelangt dann in einen Öltank, gebildet aus einer Wanne des Außengehäuses. Auf diese Weise kann eine ständige Umwälzung des Öles erfolgen.

Bei dieser Art von Kupplung sind somit zwei Kreisläufe des Betriebsmittels - im allgemeinen eines Öles - vorgesehen: Der eine Kreislauf findet im Arbeitsraum statt, gebildet aus dem Pumpenrad und dem Turbinenrad. In diesem Kreislauf muß das Öl Drehmoment übertragen, wobei es sich erwärmt.

Der andere Kreislauf ist dem Arbeitskreislauf gewissermaßen als äußerer Kreislauf überlagert. In diesem äußeren Kreislauf kann das Öl gekühlt werden.

Kupplungen dieser Art haben sich bewährt. Sie haben jedoch den folgenden Nachteil: Mit zunehmender Füllung des Arbeitsraumes steigt der Druck im Arbeitsraum an. Hierdurch tritt eine steigende Ölmenge aus den Abspritzdüsen aus, und es muß auch eine immer größere Menge Öl in den Arbeitsraum nachgefördert werden. Der Ölumlauf wird daher mit zunehmender Füllung des Arbeitsraumes in unnötiger Weise vergrößert. Dies bedeutet Verlustleistungen. Eine Lösung dieser Problematik ist der Druckschrift DE 36 10 106 C1 zu entnehmen. Bei dieser Ausführung ist das Pumpenrad drehfest mit einem Innengehäuse verbunden, welches das Turbinenrad umschließt. Pumpenrad und Turbinenrad sind als ein Einlaß in das Pumpenrad sowie ein Auslaß aus dem Innengehäuse vorgesehen, so daß Betriebsmittel umwälzbar und der Arbeitsraum entleerbar ist, wobei der Auslaß mit einem Ventil versehen ist. Dieses Ventil ist derart konzipiert, daß füllungsgradabhängig lediglich zwei Schaltzustände erreicht werden, ein erster Schaltzustand, der einen Austritt von Betriebsmittel aus dem Innenraum in das Außengehäuse zuläßt und einen zweiten Schaltzustand, der das Auslaßventil schließt. Auch dadurch wird mit steigender Betriebsmittelmenge im Arbeitskreislauf eine immer größere Menge über die Auslaßöffnungen transportiert und muß somit in den Arbeitsraum nachgefördert werden. Der Betriebsmittelumlauf wird damit mit zunehmender Füllung des Arbeitsraumes in unnötiger Weise vergrößert. Das Auslaßventil wird jedoch füllungsabhängig nur in einem ersten und einem zweiten Schaltzustand betrieben. Außerdem bedarf es einer umständlichen Betriebsmittelführung zur Beaufschlagung der Ventileinrichtung.

Der Erfindung liegt die Aufgabe zugrunde, eine hydrodynamische Kupplung mit einem Arbeitskreislauf und einem diesen überlagernden Kühlkreislauf derart zu gestalten, daß bei hohem Füllungsgrad des Arbeitsraumes nicht unnötig viel Öl durch den Kühlkreislauf tritt.

Diese Aufgabe wird durch die kennzeichnenden Merkmale von Anspruch 1 und 3 gelöst.

Die Erfindung ist anhand der Zeichnung näher erläutert.
- Fig. 1: zeigt schematisch eine hydrodynamische Kupplung, teilweise geschnitten.
- Fig. 2: zeigt ein Ölkreislaufschema.

Die Figuren 3 bis 5 zeigen zwei verschiedene Ausführungsformen von Abspritzventilen.

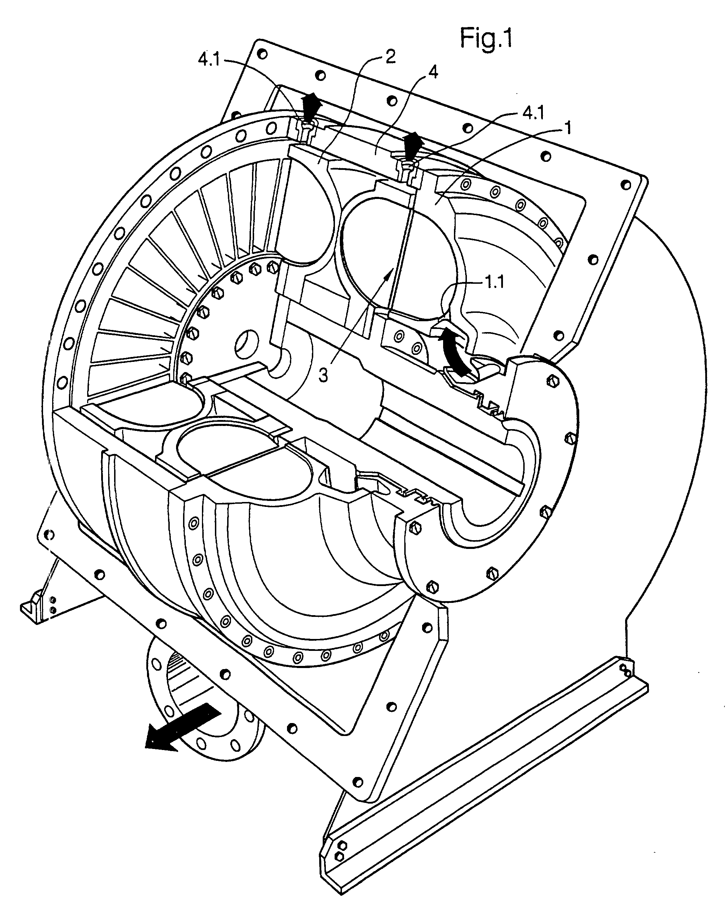

Aus Fig. 1 erkennt man ein Pumpenrad 1 sowie ein Turbinenrad 2, die beide Schaufeln aufweisen und gemeinsam einen Arbeitsraum 3 miteinander bilden.

Eine Zylinderschale 4 ist am radial äußeren Bereich des Pumpenrades befestigt und läuft somit mit diesem um.

Das Pumpenrad 1 weist Bohrungen 1.1 zum Zuführen von Öl auf. Die Zylinderschale 4 weist Abspritzdüsen 4.1 zum Abführen des Öles auf.

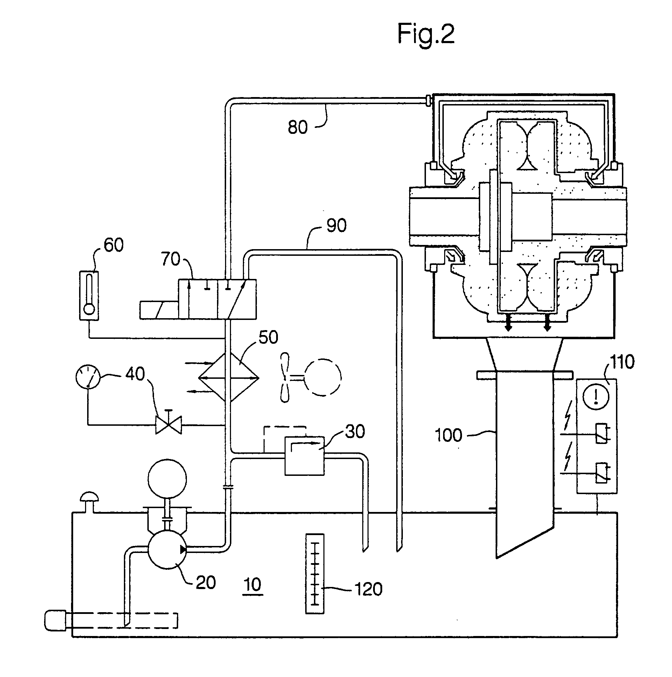

Das in Fig. 2 gezeigte Ölkreislaufschema umfaßt die folgenden Elemente:
- 10: Tank mit Einfüll- u. Belüftungsfilter
- 20: Pumpe mit Motor, Laterne und Verbindungskupplung
- 30: Druckbegrenzungsventil
- 40: Manometer mit Absperrventil
- 50: Wärmeaustauscher (alternativ Öl/Luft-Kühler)
- 60: Thermometer
- 70: 3/2-Wege-Elektromagnetventil
- 80: Verbindungsleitung zur Kupplung
- 90: By-pass-Leitung
- 100: Rücklaufleitung
- 110: Temperaturschalter mit Kontakten
- 120: Ölstandsschauglas
- 130: Heizung, falls erforderlich

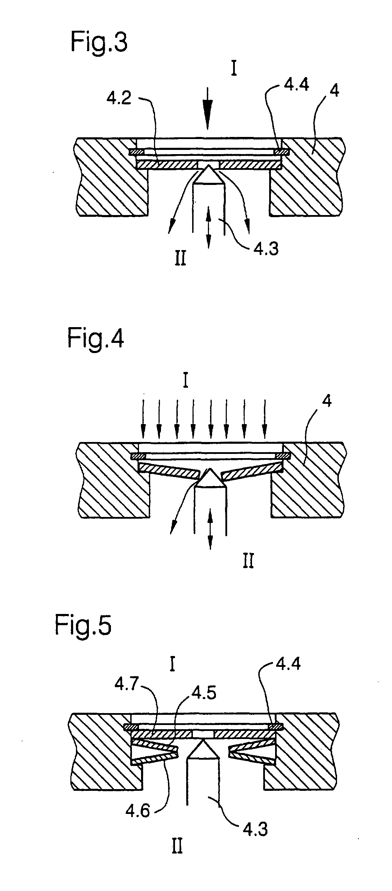

Bei den Figuren 3, 4 und 5 ist jeweils ein Abspritzventil 4.1 schematisch und in vergrößerter Darstellung gezeigt, eingebaut in die zylindrische Wand 4. Dabei ist die Innenseite (die von der zylindrischen Schale 4 umschlossen ist), mit I bezeichnet, und die Außenseite mit II.

In Fig. 3 erkennt man eine Tellerfeder-Ventilscheibe 4.2, die eine Zentralbohrung aufweist, femer einen Stift 4.3 mit einer kegelförmigen Spitze. Die Spitze ist gegen die Zentralbohrung gerichtet. Ein Sicherungsring 4.4 verhindert ein Herausfallen der Tellerfeder-Ventilscheibe 4.3.

Steigt der Druck auf der Seite an, so wird die Tellerfeder-Ventilscheibe 4.2 mehr und mehr verformt, so daß die Zentralbohrung der Spitze des Stiftes 4.3 angenähert wird, wodurch sich der Durchtrittsquerschnitt und damit der Durchsatz des Öles verringert. Dieser Zustand ist in Fig. 4 dargestellt.

Fig. 5 zeigt eine Ausführungsform einer starren Ventilscheibe 4.7, die eine Zentralbohrung aufweist und mit zwei Tellerfedem 4.5, 4.6, und einem Stift 4.3, und wiederum durch einen Sicherungsring 4.4 gegen Herausfallen gesichert ist. Auch hier weist die Spitze des Stiftes 4.3 wieder gegen die Zentralbohrung.

Bei Auftreten eines größeren Druckes auf der Seite I wird die starre Ventilscheibe 4.7 entgegen der Kraft der Tellerfedem 4.5, 4.6 verschoben, so daß sich wiederum eine Verringerung des Durchtrittsquerschnittes ergibt.

In beiden Fällen können die Stifte 4.3 gegebenenfalls in axialer Richtung verschoben werden. Ebenso kann die Kegelform abhängig vom Ölumlauf-Verlauf verschieden ausgeführt werden so daß sich die Charakteristik des Abspritzventiles ändern läßt.

## Patentansprüche

1. Hydrodynamische Kupplung mit den folgenden Merkmalen:
1.1 ein Pumpenrad (1) und ein Turbinenrad (2) bilden einen torusförmigen Arbeitsraum (3) miteinander;
1.2 es ist ein Innengehäuse (4) vorgesehen, das mit dem Pumpenrad (1) drehfest verbunden ist und das das Turbinenrad (2) umschließt;
1.3 Pumpenrad (1) und Turbinenrad (2) mit Innengehäuse (4) sind von einem Außengehäuse umschlossen;
1.4 es sind ein Einlaß in das Pumpenrad (1) sowie ein Auslaß aus dem Innengehäuse (4) vorgesehen, so daß das Betriebsmittel umwälzbar ist, und der Arbeitsraum entleerbar ist, wobei der Auslaß mit einem Ventil (4.1) versehen ist;
**gekennzeichnet durch** die folgende Merkmale:
1.5 der Durchtrittsquerschnitt des Ventiles (4.1) verringert sich mit zunehmendem Innendruck innerhalb des Innengehäuses (4) selbsttätig;
1.6 das Ventil (4.1) weist einen elastischen Körper (4.2) auf, der sich entsprechend der Beaufschlagung **durch** den Innendruck verformt und dabei den Durchtrittsquerschnitt des Ventiles (4.1) verringert.

2. Hydrodynamische Kupplung nach Anspruch 1, **dadurch gekennzeichnet, daß** der elastische Körper die Ventilscheibe (4.2) selbst ist, die eine Zentralbohrung aufweist, und daß ein Stift (4.3) vorgesehen ist, dessen Spitze gegen die Zentralbohrung gerichtet ist.

3. Hydrodynamische Kupplung mit der folgenden Merkmale:
3.1 ein Pumpenrad (1) und ein Turbinenrad (2) bilden einen torusförmigen Arbeitsraum (3) miteinander;
3.2 es ist ein Innengehäuse (4) vorgesehen, das mit dem Pumpenrad (1) drehfest verbunden ist und das das Turbinenrad (2) umschließt;
3.3 Pumpenrad (1) und Turbinenrad (2) mit Innengehäuse (4) sind von einem Außengehäuse umschlossen;
3.4 es sind ein Einlaß in das Pumpenrad (1) sowie ein Auslaß aus dem Innengehäuse (4) vorgesehen, so daß das Betriebsmittel umwälzbar ist, und der Arbeitsraum entleerbar, ist, wobei der Auslaß mit einem Ventil (4.1) versehen ist;
**gekennzeichnet durch** die folgende Merkmale:
3.5 der Durchtrittsquerschnitt des Ventiles (4.1) verringert sich mit zunehmendem Innendruck innerhalb des Innengehäuses (4) selbsttätig;
3.6 das Ventil weist eine Platte (4.7) auf, die eine Zentralbohrung aufweist, und die dem Innenraum des Innengehäuses (4) zugewandt ist;
3.7 es ist ein Stift (4.3) vorgesehen, der eine der Zentralbohrung zugewandte Spitze aufweist, und der auf der dem Innenraum abgewandten Seite (II) des Innengehäuses (4) angeordnet ist;
3.8 die Platte (4.7) ist unter dem im Innenraum (I) herrschenden Druck entgegen der Kraft von Federn (4.5, 4.6) verschiebbar.

4. Hydrodynamische Kupplung nach Anspruch 3, **dadurch gekennzeichnet, daß** der Stift 4.3 Kegelform hat und entsprechend dem gewünschten Ölumlauf-Verlauf gestaltet ist.

## Claims

1. Hydrodynamic coupling with the following features:
1.1 a pump wheel (1) and a turbine wheel (2) form a toroidal workspace (3) with one another;
1.2 an interior housing (4) non-rotatably connected to the pump wheel (1) and surrounding the turbine wheel (2) is provided;
1.3 pump wheel (1) and turbine wheel (2) with interior housing (4) are surrounded by an exterior housing;
1.4 an inlet into the pump wheel (1) and an outlet from the interior housing (4) are provided so the operating medium can be recirculated and the workspace can be emptied, the outlet being provided with a valve (4.1);
**characterised by** the following features:
1.5 the through-cross-section of the valve (4.1) automatically reduces with increasing internal pressure within the interior housing (4);
1.6 the valve (4.1) has a resilient member (4.2) which deforms in accordance with the loading by the interior pressure and reduces the through-cross-section of the valve (4.1) in the process.

2. Hydrodynamic coupling according to claim 1, **characterised in that** the resilient member is the valve disc (4.2) itself, comprising a central aperture, and **in that** a pin (4.3) is provided, the tip of which is oriented toward the central aperture.

3. Hydrodynamic coupling with the following features:
3.1 a pump wheel (1) and a turbine wheel (2) form a toroidal workspace (3) with one another;
3.2 an interior housing (4) non-rotatably connected to the pump wheel (1) and surrounding the turbine wheel (2) is provided;
3.3 pump wheel (1) and turbine wheel (2) with interior housing (4) are surrounded by an exterior housing;
3.4 an inlet into the pump wheel (1) and an outlet from the interior housing (4) are provided, so the operating medium can be recirculated and the workspace can be emptied, the outlet being provided with a valve (4.1);
**characterised by** the following features:
3.5 the through-cross-section of the valve (4.1) automatically reduces with increasing internal pressure within the interior housing (4);
3.6 the valve has a plate (4.7) comprising a central aperture and facing the interior space of the interior housing (4);
3.7 a pin (4.3) is provided, comprising a tip facing the central aperture and arranged on the side (II) of the interior housing (4) remote from the interior space;
3.8 the plate (4.7) can be displaced by the pressure prevailing in the interior space (I) against the force of springs (4.5, 4.6).

4. Hydrodynamic coupling according to claim 3, **characterised in that** the pin (4.3) has a conical shape and is designed in accordance with the desired course of oil circulation.

## Revendications

1. Accouplement hydrodynamique ayant les caractéristiques suivantes :
1.1 une roue de pompe (1) et une roue de turbine (2) forment à elles deux une chambre de travail (3) en forme de tore ;
1.2 un carter intérieur (4) solidaire du mouvement de rotation de la roue de pompe (1) et entourant la roue de turbine (2) est prévu ;
1.3 la roue de pompe (1) et la roue de turbine (2) avec carter intérieur (4) sont entourées par un carter extérieur ;
1.4 il est prévu une admission dans la roue de pompe (1) ainsi qu'une sortie du carter intérieur (4) de sorte que le fluide de travail peut circuler et que la chambre de travail peut être vidée, la sortie étant munie d'une soupape (4.1) ;
**caractérisé par** les dispositions suivantes :
1.5 la section de passage de la soupape (4.1) diminue automatiquement à mesure qu'augmente la pression intérieure au sein du carter intérieur (4) ;
1.6 la soupape (4.1) est pourvue d'un corps élastique (4.2) qui se déforme en fonction de la pression intérieure à laquelle il est soumis, diminuant ainsi la section de passage de la soupape (4.1).

2. Accouplement hydrodynamique selon la revendication 1, **caractérisé en ce que** le corps élastique constitue le disque de soupape (4.2) lui-même, ledit disque étant pourvu d'un alésage central, et qu'une goupille (4.3) dont la pointe est dirigée vers l'alésage central est prévue.

3. Accouplement hydrodynamique ayant les caractéristiques suivantes :
3.1 une roue de pompe (1) et une roue de turbine (2) forment à elles deux une chambre de travail (3) en forme de tore ;
3.2 un carter intérieur (4) solidaire du mouvement de rotation de la roue de pompe (1) et entourant la roue de turbine (2) est prévu ;
3.3 la roue de pompe (1) et la roue de turbine (2) avec carter intérieur (4) sont entourées par un carter extérieur ;
3.4 il est prévu une admission dans la roue de pompe (1) ainsi qu'une sortie du carter intérieur (4) de sorte que le fluide de travail peut circuler et que la chambre de travail peut être vidée, la sortie étant pourvue d'une soupape (4.1) ;
**caractérisé par** les dispositions suivantes :
3.5 la section de passage de la soupape (4.1) diminue automatiquement à mesure qu'augmente la pression intérieure au sein du carter intérieur (4) ;
3.6 la soupape est pourvue d'une plaque (4.7) qui est munie d'un alésage central et fait face à l'espace intérieur du carter intérieur (4) ;
3.7 il est prévu une goupille (4.3) dont la pointe est dirigée vers l'alésage central et qui est disposée sur la face extérieure (II) du carter intérieur (4) ;
3.8 sous la pression qui règne dans l'espace intérieur (I), la plaque (4.7) peut être déplacée dans la direction opposée à l'action de ressorts (4.5, 4.6).

4. Accouplement hydrodynamique selon la revendication 3, **caractérisé en ce que** la goupille (4.3) est de forme conique et est réalisée selon le parcours souhaité pour la circulation de l'huile.
